# EUROPEAN PATENT SPECIFICATION

(11) **EP 0 463 242 B1**
(45) Date of publication and mention of the grant of the patent: **04.09.1996**
(21) Application number: 90201732.6
(22) Date of filing: 29.06.1990
(51) Int. Cl.: G06K 9/64

(54) **Method of processing pattern data on the basis of ranked amplitude values, apparatus for performing the method**
Verfahren zur Musterdatenverarbeitung auf der Grundlage geordneter Amplitudenwerte, Gerät zum Durchführen des Verfahrens
Méthode de traitement de données d'image basée sur des valeurs d'amplitude ordonnées, dispositif pour exécuter la méthode

(43) Date of publication of application: 02.01.1992
(73) Proprietor: Philips Electronics N.V., 5621 BA Eindhoven (NL)
(72) Inventor: Bernsen, Johannes Arnoldus Cornelis, NL-5656 AA Eindhoven (NL); Nijholt, Geert, NL-5656 AA Eindhoven (NL); Persoon, Eric Hendrik Jozef, NL-5656 AA Eindhoven (NL)
(74) Representative: Strijland, Wilfred

(56) References cited:
- EP-A- 0 359 301
- US-A- 4 597 009

## Description

The invention relates to a method, and a corresponding apparatus, of examining patterns represented by a field of multivalued amplitudes, the method including:
- selecting a plurality of respective collections of amplitudes, each collection from a respective portion within the field, the portions being mutually disparate,
- generating a respective characteristic quantity for each of the respective collections, said characteristic quantities each representing an amplitude value that has a predetermined rank in the corresponding collection, ordered by magnitude.

The invention also relates to an apparatus for performing the method.

A method of this kind is known from European Patent Application EP-A-0 359 301 filed by the same applicant. The known method has as an object to recognize patterns by detecting a match between on the one hand a first and a second template and on the other hand the parts of the field with which the template are associated. Herein, the first template represents the parts of the pattern sought for that correspond with a logic high value, while the second template represents the parts of the pattern sought for that correspond to a logic low value. Being positioned into the field a lowest amplitude value is determined occurring in the first template and a highest amplitude value is determined in the second template. Thresholding the field associated with the positioned first template with a threshold equal to or lower than the lowest amplitude maps the relevant parts thereof correctly onto the logic high value, and thresholding the field associated with the second template with a threshold equal to or higher than the highest amplitude value maps the other relevant parts correctly onto the logic low value. Therefore, when the threshold ranges overlap, there exist thresholds that for both templates accomplish a correct mapping, and consequently a match is said to occur.

The known apparatus executing this method employs a rank-value filter as a means of identifying the lowest and highest amplitude value. Such a rank value filter produces at its output the value of the amplitude at a predetermined rank in a sequence of ordered amplitude values associated with the relevant template. The filter output signals associated with both templates are fed into a comparator of which a comparator output may be connected to a thresholding device for discriminating between a small and a large overlap of the threshold ranges.

From US patent No 4,597,009, an apparatus is known for identifying median, maximum and minimum ranked amplitude values. This apparatus collects amplitudes from each of a number of identically sized column portions in the field and ranks the amplitudes from each column in order of their magnitude. The amplitudes at specific ranks are then further compared in order to determine the median amplitude in a square window.

The prior art method and apparatus for examining patterns perform adequately, although in a rather limited application to pattern recognition based on determining an amount of overlap of the calculated ranges as described hereinabove. It is therefore an object of the invention to extend considerably the potentialities of such a method and apparatus, thereby permitting a more differentiated approach to pattern recognition.

To this end, a method according to the invention is characterized, in that at least three collections are selected and in that the method further includes:
- producing at least two comparison results by comparing the characteristic quantities, either mutually, or with respect to respective predetermined thresholds or both;
- performing a logic operation on the comparison results for thereupon producing a pattern recognition signal representative of the collections. Due to the use of at least three characteristic quantities a larger number of relations involving the characteristic quantities may be examined than is possible when only two characteristic quantities are used.

For instance, more constraints may be introduced than only a predetermined overlap for determining whether a recognition occurs or not. Also, in contrast with the prior art, more than two ranges of amplitudes may be produced, for instance with respect to grey-level images, for differentiating among several grey-level ranges. For instance, an edge in a grey-level image may be detected on the basis of adjacent transitions occurring in a succession of three amplitude ranges. Moreover more intricate logic functions than comparing and determining the sign of the difference may be employed. Alternatively, various parts of the field may undergo mutually different operations, thereby introducing a processing-dependence on location.

For instance, edge detection in a grey-level video image may be accomplished by positioning three templates into the field in a predetermined configuration. Thereupon, selection of the collection of amplitudes to be considered is established by associating the field with the positioned templates. Each template gives rise to the evaluation of a subset window of amplitudes chosen from said collection of amplitudes within its window. In case the characteristic quantity associated with the first template indicates a low-amplitude range, and the one associated with the second template indicates a high-amplitude range and in addition the one associated with the third one indicates an intermediate-amplitude range an edge may be said to be detected.

An apparatus for executing the method according to the invention preferably comprises a plurality of rank value filters coupled to a plurality of inputs of a data processing means. The data processing means may examine whether the characteristic quantities validate some predetermined relations or not for thereupon outputting a signal confirming the presence or absence of pre-established relations.

### BRIEF DESCRIPTION OF THE DRAWINGS

The invention will be explained hereinafter by way of example with reference to the accompanying drawing in which:
Figure 1 shows a first example for pattern recognition according to the invention,
Figure 2 shows a second example for pattern recognition according to the invention, and
Figure 3 shows a first exemplary apparatus according to the invention.
Figures 4A-4C show a second exemplary apparatus according to the invention, and
Figures 5A-5C show a third exemplary apparatus according to the invention.

### FIRST EXEMPLARY METHOD

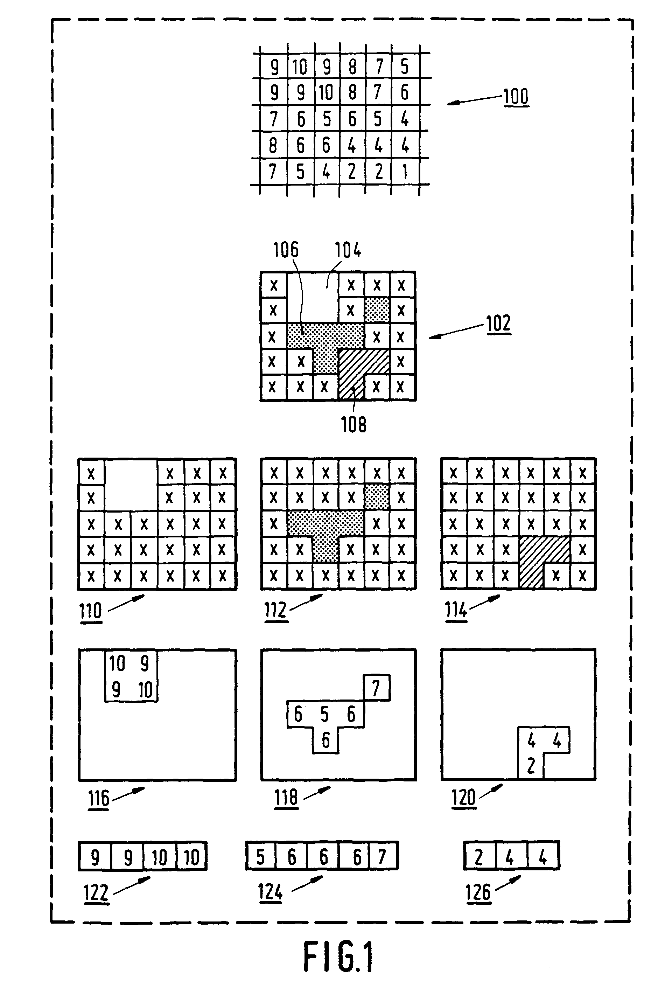

In Figure 1 an example is given of a pattern examination according to the invention. In this example three templates are used, each for evaluating a different portion of the multivalent amplitude filed denoted by 100. The number in each mask of field 100 represents the amplitude value associated with that mask.

Within the context of, for example pattern recognition in video images, these numerals represent the grey values of the pixel. In the case of, for example remote sensing applications, the numerals represent values of a measured quantity, for example a temperature or a distance from a reference point, in which case a predetermined coherence is pursued between the measured values and their mutual orientation.

It is to be noted that the use of a method or an apparatus in accordance with the invention is not restricted to the two-dimensional fields like that of the example shown in Figure 1. The use of a method in accordance with the invention with one-dimensional fields consists, for example in the search for a predetermined pattern in a (distorted), digital signal. A use of a method in accordance with the invention with three-dimensional fields consists, for example in the search for a predetermined pattern in a data field obtained by computer tomographic examination of an object. It is also to be noted that the field to be examined, having multi-valent amplitudes, need not be sub-divided into (similar) elements as shown by way of example in Figure 1. A continuous field can also be examined for a given pattern, provided that representative discrete values are assigned to parts of the field considered upon association with the sub-masks. The pattern information sought for is visualised under reference numeral 102. This particular pattern is divided into a part 104, that indicates the required segment of relatively high amplitude, a part 106, that indicates the required segment of intermediate amplitude, and a part 108 that indicates the required segment of relatively low amplitude. The crosses in pattern 102 denote the irrelevant parts (don't cares). Three templates 110, 112 and 114 represent in combination the pattern 102, that is template 110 relates to the contribution of part 104, template 112 relates to the contribution of part 106 and template 114 relates to the contribution of part 108.

Associating these templates with field 100 produces the sets of amplitudes 116, 118 and 120, respectively, that reflect the field values in the respective windows of the template. For each set the detected amplitude values are arranged in an ordered sequence as indicated by 122, 124 and 126 for the respective sets.

For recognition it is for instance required for the amplitude values thus obtained, that the lower bound of the high amplitude range related to sequence 122 is larger than the upper bound of the intermediate amplitude range related to sequence 124, and that the upper bound of the low amplitude range related to sequence 126 is smaller than the lower bound of the intermediate amplitude range related to sequence 124. In the above example the match between the templates 110, 112 and 114 and the field occurs, since the respective bounds validate said conditions. Other criteria may be formulated in order to identify a match. For instance, the relevant differences between the pairs of bounds may be prescribed in order to control the pattern detection in dependence on the presence of more or less pronounced features. Or the characteristics quantities need not all be equal to a lower or an upper bound. Medium amplitude values may be chosen, for instance in order to represent in the above example the intermediate amplitude range. Equally, amplitude values occurring at other ranks in the ordered sequences such as 122, 124 and 126 may be chosen as representatives of the characteristic quantities.

### SECOND EXEMPLARY METHOD

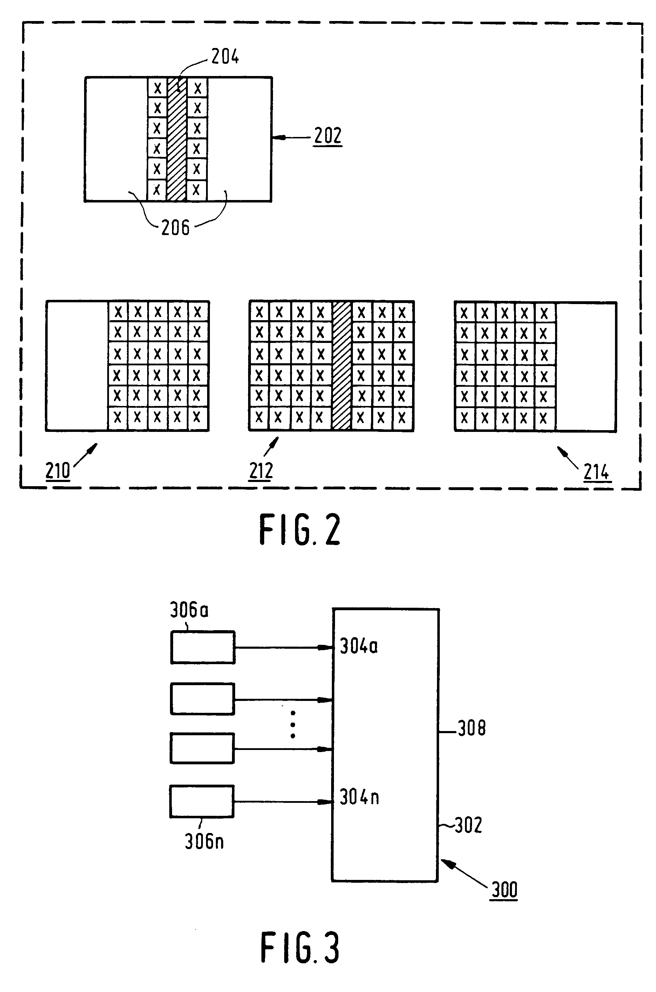

In Figure 2 another example is given of a pattern examination according to the invention. The pattern 202 now to be detected relates to a dark line 204 against a bright background 206. Again the crosses indicate don't cares. Three templates are used for representing the above structure, a left-hand-side template 210 corresponding with the left background part, the middle template 212, corresponding with the dark line, and the right-hand-side template 214, corresponding with the right background part. By assigning separate templates to the various parts constituting the pattern, a coherent set of amplitudes is generated for each part, thereby enabling each set to be processed in an appropriate manner. For instance, each set may be examined under conditions that are location-dependent. That is, the left-hand-side background may be treated differently from the right-hand-side background. Deviations from the high amplitude background may be accepted for recognition, which deviations may differ mutually for the right-hand side and the left-hand side. For example, upon associating template 210 with the multivalent amplitude field (not shown) recognition for the left-hand-side area may be established despite the fact that the relevant section of the field is polluted with darker spots. That is, the ordering of the amplitude values comprises values that also may occur in the part of the field associated with the relevant part of template 212. In order to take these deviations into account the rank in the corresponding ordered sequence of the value representative of the characteristic quantity need not be related the upper or lower bound of the belonging amplitude range. For further explanation reference is made to the above-mentioned prior art.

### FIRST EXEMPLARY APPARATUS

Figure 3 shows an example of an apparatus 300 according to the invention. The apparatus 300 includes a data processing unit 302 a plurality of inputs 304a...304n thereof being coupled with a plurality of rank value filters 306a...306n. The rank value filters 306a...306n each transmit a characteristic quantity derived from the respective set of ordered amplitudes that represent the field within the window of the associated template (not shown) coupled with a particular rank value filter. Upon reception of the characteristic quantities, each being an amplitude value at a predetermined rank in the respective set of ordered amplitudes, the data processing unit 302 may execute a pairwise comparing thereby producing logic values indicative of the compare result. These logic values may then be interrelated according to some logic function for producing an output quantity at output 308 indicating the presence or absence of predetermined correlations.

### SECOND EXEMPLARY APPARATUS

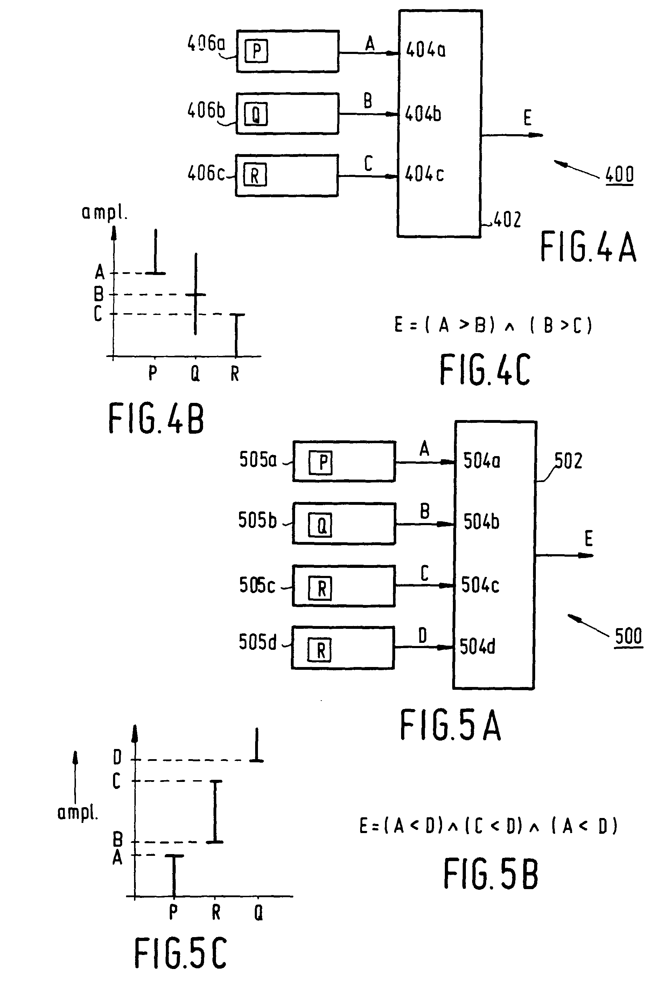

In Figure 4A-4C a second exemplary apparatus 400 according to the invention is shown for visualizing the examination of the interrelationship among the various characteristic quantities. The apparatus 400 includes a data processing unit 402, inputs 404a, 404b and 404c thereof being coupled to the rank value filters 406a, 406b and 406c, respectively. The part of the field examined by each individual filter is indicated by the letters P, Q and R in the filters 406a, 406b and 406c, respectively. Filter 406a is programmed to produce a quantity A indicative of a minimum amplitude value occurring within the part P of the field examined by this filter. Filter 406b is programmed to produce a quantity B that is indicative of a median amplitude value occurring within the associated part Q of the field. Filter 406c is programmed to produce a quantity C indicative of a maximum amplitude occurring within part R of the field. In case these characteristic quantities validate the logic relationship as shown in Figure 4B, that is, the maximum value A is larger than the minimum value C whilst the median value B lies in between (this has also been visualized in Figure 4C), data processing unit 402 outputs a confirmation output signal E.

### THIRD EXEMPLARY APPARATUS

In Figure 5A-5C a third exemplary apparatus 500 according to the invention is shown for visualizing the examination of another interrelationship. The apparatus 500 comprises a data processing unit 502 with data inputs 504a, 504b, 504c and 504d coupled with rank value filters 505a, 505b, 505c and 505d, respectively. The respective parts of the field are named P, Q and R and are examined by the respective rank filters. Filter 505a is programmed to examine part P for producing a quantity A indicative of the maximum amplitude value occurring within this part. Filter 505b is programmed to examine part Q in order to produce a characteristic quantity B indicative of the minimum amplitude value occurring in part Q. Filters 505c and 505d both examine a part R of the field, filter 505c producing a quantity C indicative of a maximum value within part R and filter 505d producing a quantity D indicative of a minimum value within part R. In case minimum D is larger than maximum A, whilst C and B lie in between, data processing unit 502 outputs a confirmative output signal E according to the relation of Figure 5B. In addition the interrelationship has been visualized in Figure 5C.

## Claims

1. A method of examining patterns represented by a field of multivalued amplitudes, the method including:
- selecting a plurality of respective collections of amplitudes, each collection from a respective portion within the field, the portions being mutually disparate,
- generating at least one respective characteristic quantity for each of the respective collections, said characteristic quantities each representing an amplitude value that has a predetermined rank in the corresponding collection, ordered by magnitude;
characterized in that at least three collections are selected and in that the method further includes:
- producing at least two comparison results by comparing the characteristic quantities, either mutually, or with respect to respective predetermined thresholds or both;
- performing a logic operation on the comparison results for thereupon producing a pattern recognition signal representative of the collections.

2. Method as in Claim 1, characterized, in that all said characteristic quantities each represent a respective amplitude value at a respective predetermined rank in order of magnitude in the corresponding collection.

3. Apparatus for examining patterns represented by a field of multivalued amplitudes, the apparatus including:
- selecting means for selecting a plurality of respective collections of amplitudes, each collection from a respective portion within the field, the portions being mutually disparate,
- a characteristic quantity generator, for generating at least one respective characteristic quantity for each of the respective collections, said characteristic quantities each representing an amplitude value that has a predetermined rank in the corresponding collection, ordered by magnitude;
characterized in that the selecting means is arranged for selecting at least three collections and in that the apparatus further includes:
- comparator means for producing at least two comparison results by comparing the characteristic quantities, either mutually, or with respect to respective predetermined thresholds or both;
- data processing means for performing a logic operation on the comparison results for thereupon producing a pattern recognition signal representative of the collections.

4. Apparatus as in Claim 3, wherein the rank value filter is a programmed means.

5. Apparatus as in Claim 4, wherein the characteristic quantity generator includes a plurality of rank value filters coupled with the data processing means.

## Patentansprüche

1. Verfahren zum Untersuchen von Mustern, die von einem Feld mehrwertiger Amplituden repräsentiert werden, wobei das Verfahren enthält:
- Selektieren einer Vielzahl von jeweiligen Amplitudenmengen, jede Menge aus einem jeweiligen Teil innerhalb des Feldes, wobei die Teile zueinander ungleich sind,
- Generieren zumindest einer jeweiligen Kenngröße für jede der jeweiligen Mengen, wobei diese Kenngrößen jeweils einen Amplitudenwert repräsentieren, der nach Größe geordnet einen vorgegebenen Stellungswert in der entsprechenden Menge hat, dadurch gekennzeichnet, daß zumindest drei Mengen selektiert werden und daß das Verfahren weiterhin enthält:
- Erzeugen zumindest zweier Vergleichsergebnisse durch Vergleichen der Kenngrößen entweder miteinander oder bezüglich jeweiliger zuvor bestimmter Schwellen oder beides;
- Ausführen einer Logikoperation an den Vergleichsergebnissen, um daraufhin ein für die Mengen repräsentatives Mustererkennungssignal zu erzeugen.

2. Verfahren nach Anspruch 1, dadurch gekennzeichnet, daß alle genannten Kenngrößen jeweils einen jeweilige Amplitudenwert bei einem jeweiligen Stellungswert repräsentieren, in der Reihenfolge der Größe in der entsprechenden Menge.

3. Gerät zum Untersuchen von Mustern, die von einem Feld mehrwertiger Amplituden repräsentiert werden, wobei das Gerät enthält:
- Selektionsmittel zum Selektieren einer Vielzahl von jeweiligen Amplitudenmengen, jede Menge aus einem jeweiligen Teil innerhalb des Feldes, wobei die Teile zueinander ungleich sind,
- einen Generator für Kenngrößen zum Generieren zumindest einer jeweiligen Kenngröße für jede der jeweiligen Mengen, wobei diese Kenngrößen jeweils einen Amplitudenwert repräsentieren, der nach Größe geordnet einen vorgegebenen Stellungswert in der entsprechenden Menge hat,
dadurch gekennzeichnet, daß das Selektionsmittel zum Selektieren von zumindest drei Mengen eingerichtet ist und daß das Gerät weiterhin enthält:
- Vergleichsmittel zum Erzeugen zumindest zweier Vergleichsergebnisse durch Vergleichen der Kenngrößen entweder miteinander oder bezüglich jeweiliger zuvor bestimmter Schwellen oder beides;
- Datenverarbeitungsmittel zum Ausführen einer Logikoperation an den Vergleichsergebnissen, um daraufhin ein für die Menge repräsentatives Mustererkennungssignal zu erzeugen.

4. Gerät nach Anspruch 3, in dem das Stellungswert-Filter ein programmierbares Mittel ist.

5. Gerät nach Anspruch 4, in dem der Generator für die Kenngröße eine Vielzahl von Stellungswert-Filtern enthält, die mit den Datenverarbeitungsmitteln gekoppelt sind.

## Revendications

1. Procédé d'examen de structures représentées par une zone d'amplitude de multivalentes, le procédé consistant :
- à sélectionner une pluralité de collections respectives d'amplitudes, chaque collection provenant d'une partie respective se situant à l'intérieur de la zone, les parties étant mutuellement disparates,
- à générer au moins une quantité caractéristique respective pour chacune des collections respectives, lesdites quantités caractéristiques respectives représentant chacune une valeur d'amplitude qui a un rang prédéterminé dans la collection correspondante, ordonné par grandeur, caractérisé en ce qu'au moins trois collections sont sélectionnées et en ce que le procédé comprend en outre les étapes suivantes :
- on produit au moins deux résultats de comparaison en comparant les quantités caractéristiques, mutuellement et/ou par rapport à des seuils prédéterminés respectifs, et
- on exécute une opération logique sur les résultats de comparaison pour ainsi produire un signal de reconnaissance de structure représentatif des collections.

2. Procédé selon la revendication 1, caractérisé en ce que toutes lesdites quantités caractéristiques représentent chacune une valeur d'amplitude respective à un rang prédéterminé respectif en ordre de grandeur dans la collection correspondante.

3. Appareil d'examen de structures représentées par une zone d'amplitudes multivalentes, l'appareil comprenant :
- des moyens de sélection pour sélectionner une pluralité de collections respectives d'amplitudes, chaque collection provenant d'une partie respective à l'intérieur de la zone, les parties étant mutuellement disparates,
- un générateur de quantités caractéristiques pour générer au moins une quantité caractéristique respective pour chacune des collections respectives, lesdites quantités caractéristiques représentant chacune une valeur d'amplitude qui a un rang prédéterminé dans la collection correspondante, ordonné par grandeur, caractérisé en ce que les moyens de sélection sont agencés pour sélectionner au moins trois collections et en ce que l'appareil comprend en outre :
- des moyens de comparaison pour produire au moins deux résultats de comparaison en comparant les quantités caractéristiques, mutuellement et/ou par rapport à des seuils prédéterminés respectifs, et
- des moyens de traitement de données pour exécuter une opération logique sur les résultats de comparaison pour ainsi produire un signal de reconnaissance de structure représentatif des collections.

4. Appareil selon la revendication 3, dans lequel le filtre de valeur de rang est un moyen programmé.

5. Appareil selon la revendication 4, dans lequel le générateur de quantités caractéristiques comprend une série de filtres de valeurs de rang couplés aux moyens de traitement de données.
